# EUROPEAN PATENT SPECIFICATION

(11) **EP 3 194 147 B1**
(45) Date of publication and mention of the grant of the patent: **29.04.2020**
(21) Application number: 15832765.0
(22) Date of filing: 10.09.2015
(51) Int. Cl.: B29C 64/106, B29C 64/112

(54) **ADDITIVE MANUFACTURING USING PRESSURIZED SLURRY FEED**
GENERATIVE FERTIGUNG UNTER VERWENDUNG VON DRUCKBEAUFSCHLAGTER SCHLAMMZUFÜHRUNG
FABRICATION ADDITIVE UTILISANT UNE CHARGE DE SUSPENSION SOUS PRESSION

(30) Priority: 16.09.2014 US 201462051227 P
(43) Date of publication of application: 26.07.2017
(73) Proprietor: Aerojet Rocketdyne, Inc., Sacramento, CA 95813-6000 (US)
(72) Inventor: HUSBAND, Clarence, Sacramento, California 95813-6000 (US); WENDLBERGER, Julie, Sacramento, California 95813-6000 (US); BRUSHWOOD, Sean, Sacramento, California 95813-6000 (US); DOLL, Daniel, Sacramento, California 95813-6000 (US); O'CONNER, Robert, Sacramento, California 95813-6000 (US)
(74) Representative: Dehns
(86) International application number: PCT/US2015/049327
(87) International publication number: WO 2016/064489

(56) References cited:
- WO-A2-2013/019876
- DE-A1- 10 150 256
- US-A- 3 290 190
- US-A- 5 205 983
- US-A- 5 936 861
- US-A1- 2009 217 525
- US-A1- 2009 217 642
- Anonymous: "Could 3D printing be used to achieve perfect grain geometry of solid and hybrid rocket motors", Space Stack Exchange , 11 August 2014 (2014-08-11), XP002754760, Retrieved from the Internet: URL:http://space.stackexchange.com/questio ns/4153/could-3d-printing-be-used-to-achie ve-perfect-grain-geometry-of-solid-and-hyb rid [retrieved on 2016-02-24]
- Ron Jones: "Hybrid Rocket Engines use Additive Manufacturing to combine the advantages of solid and liquid propellants", Stratasys , 15 October 2010 (2010-10-15), XP002754761, Retrieved from the Internet: URL:http://www.stratasys.com/resources/cas e-studies/aerospace/rocket-crafters [retrieved on 2016-02-24]

## Description

### BACKGROUND

Rocket motors and the like include solid energetic materials that, upon ignition, generate pressurized gases that can be expelled through a nozzle to produce thrust. The solid energetic is typically cast, molded, and/or machined into the desired shape of the rocket motor.

A prior art additive manufacturing process having the features of the preamble to claim 1 is disclosed in WO 2013/019876.

### SUMMARY

The present invention provides an additive manufacturing process according to claim 1.

In an embodiment, the heating is to a temperature that is equal to or greater than a cure temperature of the slurry.

A further embodiment includes commencing a solvation of a polyvinyl chloride component of the slurry during the heating.

A further embodiment of any of the foregoing embodiments includes commencing hardening of the slurry during the depositing of the slurry.

A further embodiment of any of the foregoing embodiments includes feeding the slurry from a pressurized vessel to the nozzle. The pressurized vessel has a pressure of approximately 20 to 500 pounds per square inch (138 kPa to 3.45 MPa).

In a further embodiment of any of the forgoing embodiments, the heating is at approximately 170 to 220°F (76°C to 104°C).

In a further embodiment of any of the forgoing embodiments, the plastisol includes at least one of polyvinyl chloride or nitrocellulose.

In a further embodiment of any of the forgoing embodiments, the plastisol includes at least one of a phthalate plasticizer or an adipate plasticizer.

In a further embodiment of any of the forgoing embodiments, the plastisol includes a ratio, by weight, of polyvinyl chloride to the plasticizer that is in a range of 80:20 to 20:80.

In a further embodiment of any of the forgoing embodiments, the slurry includes, by weight, approximately a 1:1 ratio of a plasticizer and at least one of polyvinyl chloride or nitrocellulose, and up to approximately 85% of a solid energetic material.

### BRIEF DESCRIPTION OF THE DRAWINGS

The various features and advantages of the present disclosure will become apparent to those skilled in the art from the following detailed description. The drawings that accompany the detailed description can be briefly described as follows.
Figure 1 illustrates an example additive manufacturing process.
Figure 2 illustrates an example system for performing the process of Figure 1.

### DETAILED DESCRIPTION

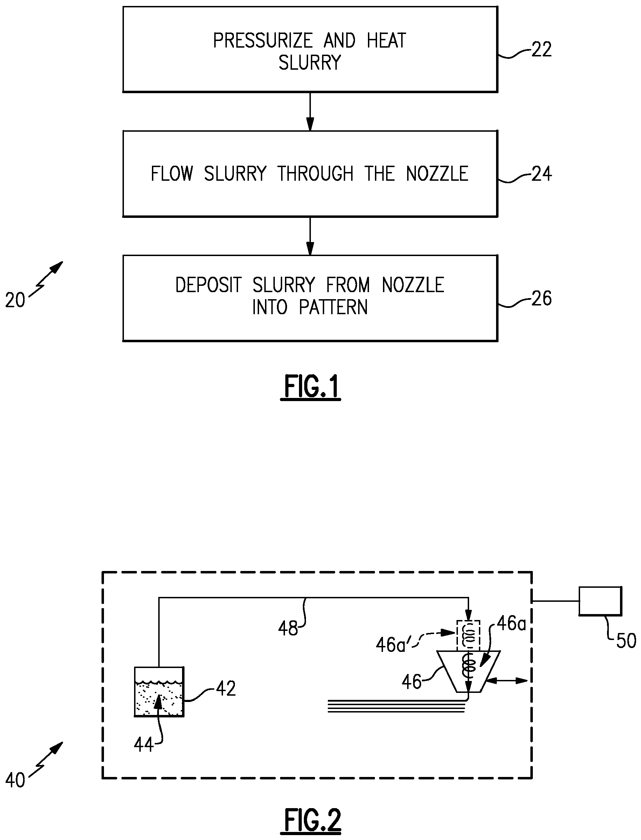

Figure 1 illustrates an example additive manufacturing process 20 and Figure 2 depicts an example system 40 for performing the process 20. As will be described, the process 20 can be used to form, or "print," solid energetic materials or other materials into desired geometries. For example, solid energetic materials can be printed into desired three-dimensional geometries for rocket motors and the like.

The process 20 is described herein with respect to steps 22, 24, and 26, and the system 40. Additional processing steps may be used prior to, in between, or subsequent to the steps 22, 24, and 26. Generally, the system 40 includes a vessel 42 that holds a slurry 44, a nozzle 46 for dispensing the slurry 44, and one or more lines 48, such as pipes or tubes, through which the slurry 44 moves from the vessel 42 to the nozzle 46. The nozzle 46 may include a heating block 46a. In arrangements outside the scope of the present invention, the heating block 46a may be located adjacent to and upstream of the nozzle 46, as shown at 46a'. The vessel 42, the line 48, and the nozzle 46 may include one or more valves, one or more pumps, or the like for moving the slurry 44. A controller 50 is in communication with at least the nozzle 46 and may also be in communication with the vessel 42, the line 48, heating block 46a/46a', and any valve(s) or pump(s), to control operation of the system 40. In this regard, the controller 50 includes hardware, such as a micro-processor, software, or both, that are configured and/or programmed to carry out the process 20.

For printing a solid energetic material, the slurry 44 includes a mixture of a plastisol and solid energetic material. A plastisol is a mixture or suspension of polymeric particles in a liquid plasticizer. For instance, the plasticizer includes phthalates, adipates, or combinations thereof. Phthalates can include, but are not limited to, diisononyl phthalate (DINP), diisodecyl phthalate (DIDP), and di-2-ethylhexyl phthalate, and adipates can includes, but are not limited to, dioctyl adipate (DOA) and dioctyl sebacate (DOS). For example, the plastisol includes polymeric particles of at least one of polyvinyl chloride or nitrocellulose and a liquid plasticizer. The solid energetic material is also provided in particle form and is mixed with the plastisol.

The solid energetic material is selected according to the desired end use requirements. For example, the solid energetic material can include, but is not limited to, metallic fuels, oxidizers, and fuel/oxidizer blends. The solid energetic material may also include one or more inert binders, burn modifiers, stabilizers, and the like. In one example, the slurry 44 includes, by weight, approximately 7.5% of polyvinyl chloride, approximately 7.5% of a plasticizer, and approximately 85% of the solid energetic material. In a further example, the solid energetic material includes, by weight, approximately 18% of metallic fuel.

Turning again to the process 20, at step 22 the slurry is pressurized and heated. The slurry 44 is pressurized to facilitate flow from the vessel 42 through the line 48 to the nozzle 46. For example, the slurry 44 is pressurized in the vessel 42 at approximately 20 to 500 pounds per square inch (138 kPa to 3.45 MPa). The slurry 44 is then fed under this pressure from the vessel 42 to the nozzle 46. The pressurization also facilitates suppression of curing prior to the nozzle 46 to reduce "globbing." In one further example based on the slurry composition described above that includes at least one of polyvinyl chloride or nitrocellulose, dioctyl adipate, and solid energetic material, the slurry 44 has a viscosity that is less than 20 kilopoise, is pressurized in the vessel 42 at approximately 30 to 40 pounds per square inch (207 to 276 kPa), and is heated to approximately 170 to 220 °F (76°C to 104°C).

The slurry 44 may be at substantially ambient temperature until the heating. In this regard, in one example, the process 20 includes heating the slurry 44 in the nozzle 46 via the heating block 46a. The slurry 44 may be fully uncured or substantially fully uncured prior to being heated. At the proper temperature and pressure, the heating commences solvation of the polymeric particles (e.g., polyvinyl chloride) by the liquid plasticizer.

At step 24 the pressurized heated slurry 44 flows through the nozzle 46, and at step 26 the slurry 44 is deposited from the nozzle 46 in a predetermined pattern. Although the slurry 44 is pressurized and heated to the appropriate temperature at the nozzle 46, the slurry 44 may reach a substantially fully cured or hardened state after being dispensed from the nozzle 46 and cooled. For instance, depending on the flow of the slurry 44, solvation and curing may begin in the nozzle 46 or after dispensing from the nozzle 46. In one example, heating to a temperature equal to or greater than a cure temperature of the slurry commences solvation of the polymeric particles by the liquid plasticizer and thus initiates curing and hardening of the slurry 44.

The predetermined pattern may be a computerized pattern of the article being formed. In this regard, the nozzle 46 moves back and forth to selectively deposit the slurry 44 in the computerized pattern. Additionally or alternatively, the substrate on which the slurry 44 is dispensed can be moved according to the computerized pattern. Multiple layers of the slurry 44 can be selectively deposited on one another to build-up the article in accordance with the computerized pattern.

In further examples, the nozzle 46 is also designed or selected with respect to the slurry composition. For instance, since the slurry 44 contains polymeric particles and solid energetic material particles, the dispensing orifice of the nozzle 46 through which the slurry 44 is deposited is at least as large as the largest particles in the composition. More typically, the orifice may be at least several times larger than the largest particles in the composition, to reduce bridging and plugging of the nozzle 46. For instance, the nozzle orifice can be, but is not limited to, 1/64 to 3/64 inches (0.4 mm to 1.2 mm).

In a further example, the composition of the slurry 44 is selected with respect to the amount of heating provided at the heating block 46a or 46a'. For instance, the slurry composition has a ratio, by weight, of 80:20 to 20:80 with respect to the amount of polyvinyl chloride and/or nitrocellulose to the amount of dioctyl adipate. In a further example, the ratio is 60:40 to 40:60.

Although a combination of features is shown in the illustrated examples, not all of them need to be combined to realize the benefits of various embodiments of this disclosure. In other words, a system designed according to an embodiment of this disclosure will not necessarily include all of the features shown in any one of the Figures or all of the portions schematically shown in the Figures. Moreover, selected features of one example embodiment may be combined with selected features of other example embodiments.

The preceding description is exemplary rather than limiting in nature. Variations and modifications to the disclosed examples may become apparent to those skilled in the art that do not necessarily depart from this disclosure. The scope of legal protection given to this invention is given by the appended claims.

## Claims

1. An additive manufacturing process comprising:
pressurizing and heating a slurry (44);
flowing the pressurized heated slurry (44) through a nozzle (46); and
depositing multiple layers of the slurry (44) in a predetermined pattern, wherein the heating is performed in the nozzle (46);
**characterised in that**:
the slurry (44) includes a plastisol and a solid energetic material, wherein the plastisol is a mixture or suspension of polymeric particles in a liquid plasticizer; and by
the heating commencing solvation of the polymeric particles by the liquid plasticizer.

2. The process as recited in claim 1, wherein the heating is to a temperature that is equal to or greater than a cure temperature of the slurry (44).

3. The process as recited in claim 1 or 2, further comprising commencing solvation of a polyvinyl chloride component of the slurry (44) during the heating.

4. The process as recited in claim 1, 2 or 3, further comprising commencing hardening of the slurry (44) during the depositing of the slurry (44).

5. The process as recited in any preceding claim, further comprising feeding the slurry (44) from a pressurized vessel (42) to the nozzle (46), the pressurized vessel (42) having a pressure of approximately 138 kPa to 3.45 MPa (20 to 500 pounds per square inch).

6. The process as recited in any preceding claim, wherein the heating is at approximately 76°C to 104°C (170°F to 220°F).

7. The process as recited in any preceding claim, wherein the plastisol includes at least one of polyvinyl chloride or nitrocellulose.

8. The process as recited in any preceding claim, wherein the plastisol includes at least one of a phthalate plasticizer or an adipate plasticizer.

9. The process as recited in any preceding claim, wherein the plastisol includes a ratio, by weight, of polyvinyl chloride to the plasticizer that is in a range of 80:20 to 20:80.

10. The process as recited in any preceding claim, wherein the slurry includes, by weight, approximately a 1:1 ratio of a plasticizer and at least one of polyvinyl chloride or nitrocellulose, and up to approximately 85% of a solid energetic material.

## Patentansprüche

1. Additives Herstellungsverfahren, umfassend:
Druckbeaufschlagen und Erwärmen einer Aufschlämmung (44);
Treiben der druckbeaufschlagten erwärmten Aufschlämmung (44) durch eine Düse (46); und
Ablagern mehrerer Schichten der Aufschlämmung (44) in einem vorbestimmten Muster, wobei das Erwärmen in der Düse (46) durchgeführt wird;
**dadurch gekennzeichnet, dass**:
die Aufschlämmung (44) ein Plastisol und ein festes energetisches Material einschließt, wobei das Plastisol eine Mischung oder Suspension aus polymeren Partikeln in einem flüssigen Weichmacher ist; und dass
das Erwärmen eine Solvatisierung der polymeren Partikel durch den flüssigen Weichmacher einleitet.

2. Verfahren nach Anspruch 1, wobei das Erwärmen bis zu einer Temperatur erfolgt, die gleich wie oder höher als eine Aushärtungstemperatur der Aufschlämmung (44) ist.

3. Verfahren nach Anspruch 1 oder 2, das ferner ein Einleiten einer Solvatisierung eines Polyvinylchlorid-Bestandteils der Aufschlämmung (44) während des Erwärmens umfasst.

4. Verfahren nach Anspruch 1, 2 oder 3, das ferner ein Einleiten eines Aushärtens der Aufschlämmung (44) während des Ablagerns der Aufschlämmung (44) umfasst.

5. Verfahren nach einem vorstehenden Anspruch, das ferner ein Zuleiten der Aufschlämmung (44) von einem druckbeaufschlagten Behälter (42) zu der Düse (46) umfasst, wobei der druckbeaufschlagte Behälter (42) einen Druck von etwa 138 kPa bis 3,45 MPa (20 bis 500 Pfund pro Quadratzoll) aufweist.

6. Verfahren nach einem vorstehenden Anspruch, wobei das Erwärmen bei etwa 76 °C bis 104 °C (170 °F bis 220 °F) erfolgt.

7. Verfahren nach einem vorstehenden Anspruch, wobei das Plastisol mindestens eines aus Polyvinylchlorid oder Nitrozellulose einschließt.

8. Verfahren nach einem vorstehenden Anspruch, wobei das Plastisol mindestens eines aus einem Phthalat-Weichmacher oder einem Adipat-Weichmacher einschließt.

9. Verfahren nach einem vorstehenden Anspruch, wobei das Plastisol ein Gewichtsverhältnis von Polyvinylchlorid zu dem Weichmacher, das in einem Bereich von 80:20 bis 20:80 liegt, einschließt.

10. Verfahren nach einem vorstehenden Anspruch, wobei die Aufschlämmung gewichtsmäßig etwa ein 1:1-Verhältnis eines Weichmachers und mindestens eines aus Polyvinylchlorid oder Nitrozellulose und bis zu etwa 85 % eines festen energetischen Materials einschließt.

## Revendications

1. Procédé de fabrication d'additif comprenant :
la mise sous pression et le chauffage d'une suspension (44) ;
l'écoulement de la suspension chauffée sous pression (44) à travers une buse(46); et
le dépôt de multiples couches de la suspension (44) selon un motif prédéterminé, dans lequel le chauffage est effectué dans la buse (46) ;
**caractérisé en ce que** :
la suspension (44) inclut un plastisol et un matériau énergétique solide, dans lequel le plastisol est un mélange ou une suspension de particules polymères dans un plastifiant liquide ; et **en ce que** :
le chauffage déclenche la solvatation des particules polymères par le plastifiant liquide.

2. Procédé selon la revendication 1, dans lequel le chauffage se fait à une température qui est égale ou supérieure à une température de cuisson de la suspension (44).

3. Procédé selon la revendication 1 ou 2, comprenant en outre le déclenchement de la solvatation d'un composant de poly(chlorure de vinyle) de la suspension (44) au cours du chauffage.

4. Procédé selon la revendication 1, 2 ou 3, comprenant en outre le déclenchement de la cuisson de la suspension (44) au cours du dépôt de la suspension (44).

5. Procédé selon l'une quelconque des revendications précédentes, comprenant en outre la fourniture de la suspension (44) venant d'une cuve sous pression (42) à la buse (46), la cuve sous pression (42) ayant une pression d'environ 138 kPa à 3,45 MPa (20 à 500 livres par pouce carré).

6. Procédé selon l'une quelconque des revendications précédentes, dans lequel le chauffage se fait approximativement à une température de 76 °C à 104 °C (170 °F à 220 °F).

7. Procédé selon l'une quelconque des revendications précédentes, dans lequel le plastisol inclut au moins un corps parmi le poly(chlorure de vinyle) ou la nitrocellulose.

8. Procédé selon l'une quelconque des revendications précédentes, dans lequel le plastisol inclut au moins un corps parmi un plastifiant de phtalate ou un plastifiant d'adipate.

9. Procédé selon l'une quelconque des revendications précédentes, dans lequel le plastisol inclut un rapport en poids du poly(chlorure de vinyle) au plastifiant qui se situe dans une plage de 80:20 à 20:80.

10. Procédé selon l'une quelconque des revendications précédentes, dans lequel la suspension inclut en poids approximativement un rapport de 1:1 d'un plastifiant et d'au moins un corps parmi le poly(chlorure de vinyle) ou la nitrocellulose et jusqu'à environ 85 % d'un matériau énergétique solide.
